# EUROPÄISCHE PATENTSCHRIFT

(11) **EP 0 800 151 B1**
(45) Veröffentlichungstag und Bekanntmachung des Hinweises auf die Patenterteilung: **25.05.2005**
(21) Anmeldenummer: 97104665.1
(22) Anmeldetag: 19.03.1997
(51) Int. Cl.: G07C 5/12

(54) **Antriebsverbindung für ein Registrierorgan in einem Fahrtschreiber**
Drive connection for a tachograph registering device
Liaison d'entraînement pour un dispositif d'enregistrement de tachygraphe

(30) Priorität: 06.04.1996 DE 19613872
(43) Veröffentlichungstag der Anmeldung: 08.10.1997
(73) Patentinhaber: SIEMENS AKTIENGESELLSCHAFT, 80333 München (DE)
(72) Erfinder: Hug, Klaus, Dipl.-Ing. (FH), 78727 Oberndorf (DE); Riester, Thomas, Dipl.-Ing. (FH), 78052 Villingen-Schwenningen (DE)

(56) Entgegenhaltungen:
- EP-A- 0 309 854
- EP-A- 0 328 454
- EP-A- 0 709 683
- DE-U- 9 317 101
- GB-A- 1 417 366

## Beschreibung

Die Erfindung betrifft eine Antriebsverbindung für ein Registrierorgan in einem Fahrtschreiber mit einem flachen Einbaugehäuse, in welchem als Aufzeichnungsträger gleichzeitig zwei gleichachsig angeordnete und mittels einer Schublade zwischen einer Einlege-/Entnahmeposition und einer Registrierposition bewegbare, uhrzeitrichtig angetriebene Diagrammscheiben Anwendung finden, ein auf der untenliegenden Diagrammscheibe zur Aufzeichnung von Balkendiagrammen wirksames Registrierorgan an einer den beiden Diagrammscheiben zugeordneten Distanzplatte gelagert ist und die Distanzplatte zum Wechseln der untenliegenden Diagrammscheibe im Körper der Schublade derart schwenkbar angebracht ist, daß sich die geometrische Achse der Distanzplatte in einer Parallellage zu den Diagrammscheiben befindet.

Aus der GB-A-1 417 366 und der EP-A-0 328 454 sind sogannte "Kompaktfahrtenschreiber" bekannt. Solche Fahrtenschreiber enthalten im Gegensatz zum Fahrtenschreiber der vorliegenden Erfindung auch einen Tachometer, der zum Einlegen und Entnehmen von Diagrammscheiben mit Teilen des Fahrtschreibers nach oben aufgeklappt werden kann. Die vorgenannten Schriften beschreiben Lösungen für Fahrtschreiber, in die gleichzeitig zwei Diagrammscheiben eingelegt und beschrieben werden können. Bei der erstgenannten Schrift weisen die zu beschreibenden Oberflächen der Diagrammscheiben voneiander weg und liegen jeweils auf einer Seite einer Unterlage auf. In dem aufgeklappten Teil des Fahrtschreibers sind Schreibmittel zum Beschreiben der ersten Diagrammscheibe angeordnet, Schreibmittel zum Beschreiben der zweiten Diagrammscheibe befinden sich im nicht abgeklappten Teil des Fahrtschreibers.Bei der letztgenannten Schrift berühren sich die die zu beschreibenden Oberflächen der Diagrammscheiben in einem ersten Bereich. In einem zweiten Bereich werden die Scheiben voneinander gespeizt und von unabhängig voneinander angetriebenen Schreibmitteln beschrieben.

Derartige flach konzipierte, als sogenannte Zweifahrergeräte ausgebildete Fahrtschreiber bereiten erhebliche Schwierigkeiten hinsichtlich der räumlichen Anordnung der Antriebsmittel insbesondere aber der Antriebsverbindungen zu dem Zentrier- und Mitnahmedorn der Diagrammscheiben und den verschiedenen auf den beiden Diagrammscheiben wirksamen Registrierorganen sowie der Verriegelung, Fixierung und Entriegelung der Schublade selbst. Ferner müssen solche Fahrtschreiber auf einfache Weise reproduzierbar sein, letzten Endes den Anforderungen der Großserienfertigung genügen und der für die Fahrzeuginstrumentierung ohnehin bestehenden Bedingung eines möglichst geringen Aufwandes gerecht werden, wobei wegen der geforderten Registriergenauigkeit ein relativ hoher Qualitätsstand zu schaffen ist. Das heißt, es sind größere Toleranzadditionen zu vermeiden, Mehrfachnutzungen von Antrieben und Antriebsverbindungen anzustreben und die Anzahl der Bauteile zu reduzieren. Dies gilt insbesondere für die Gestaltung der Antriebsverbindung zu dem auf der untenliegenden Diagrammscheibe wirksamen, räumlich relativ ungünstig gelagerten Registrierorgan.

Die Aufgabe der vorliegenden Erfindung bestand somit darin eine Antriebsverbindung für das an der Distanzplatte gelagerte Registrierorgan zu schaffen, welcher den vorstehend genannten, sich zum Teil widersprechenden Bedingungen optimal gerecht wird.

Die Lösung der Aufgabe beschreibt der Anspruch 1. Vorteilhafte Ausgestaltungen der Erfindung sind in den Unteransprüchen dargestellt.

Die gefundene Lösung erfüllt die aufgabengemäß gestellten Anforderungen an die gesuchte Antriebsverbindung in vollem Umfange. Insbesondere bietet sie eine zuverlässige Funktion, die auch bei einer weniger sorgfältigen Handhabung der Distanzplatte beim Wechseln der Diagrammscheiben gewährleistet ist. Der Gedanke den Antrieb des in der Distanzplatte gelagerten und auf der untenliegenden Diagrammscheibe wirksamen Registrierorgans vom Schlitten einer Mehrspurregistriervorrichtung abzugreifen, die der obenliegenden Diagrammscheibe zugeordnet ist, vermeidet einen separaten Antrieb für das in der Distanzplatte gelagerte Registrierorgan und eine erheblich größere Anzahl von Bauelementen in der dann erforderlichen Getriebeverbindung. Hervorzuheben ist ferner, daß innerhalb der Antriebsverbindung kein Versatzproblem auftritt, da ein Einkuppelvorgang beim Verschwenken der Distanzplatte fehlt. Auf der anderen Seite ist die Mitnahmeposition zwischen dem Schlitten der Mehrspurregistriervorrichtung und dem Übertragungshebel relativ genau festgelegt, da der Schlitten in bezug auf die Lage des auf dem Schlitten angeordneten Schreibstiftes zu den auf den Diagrammscheiben aufzuzeichnenden Registrierspuren justiert werden muß und die Schublade, in welcher der Übertragungshebel gelagert ist, beim Schließen mit Mitteln zusammenwirkt, die eine genaue Lagefixierung der Schublade in der Registrierposition ermöglichen.

Im folgenden sei die Erfindung anhand von Zeichnungen erläutert. Es zeigen:
- Figur 1: eine Frontansicht eines die Erfindung beinhaltenden Fahrtschreibers,
- Figur 2: eine Draufsicht auf die Schublade des Fahrtschreibers gemäß Figur 1 mit Freischnitten und mit einer Zuordnung einer Mehrspurregistriervorrichtung,
- Figur 3: eine bezogen auf die Figur 2 Untersicht von Distanzplatte und Brücke,
- Figur 4: ein weiteres Ausführungsbeispiel eines der untenliegenden Diagrammscheibe zugeordneten Registrierorgans.

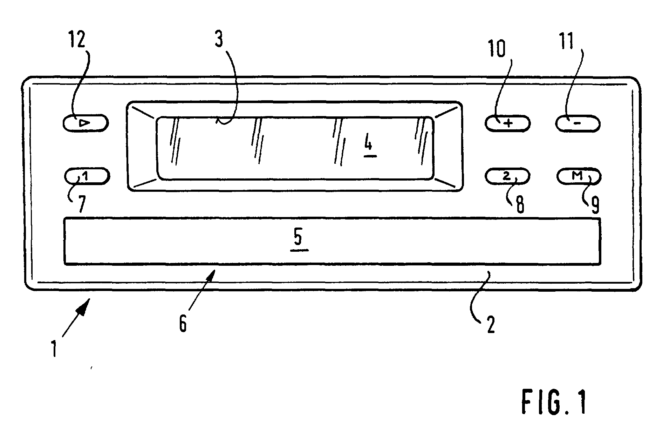

Die Frontansicht, Figur 1, zeigt einen ein flaches Einbaugehäuse aufweisenden Fahrtschreiber 1, in dessen Frontwand 2 eine Aussparung 3 ausgebildet ist, die als Fenster für die Anzeigemittel des Fahrtschreibers 1, beispielsweise für eine LCD-Vorrichtung 4 dient. Mit 5 ist eine Leiste bzw. ein Frontwandelement bezeichnet, welches Teil einer Schublade 6, die in dem Gehäuse des Fahrtschreibers 1 verschiebbar geführt ist, darstellt. 7, 8, 9, 10, 11 und 12 bezeichnen Tasten, von denen 7 und 8 den an sich bei herkömmlichen Fahrtschreibern üblichen Drehknöpfen entsprechen, das heißt, mit denen die Arbeitszeitarten Pause, Lenkzeit und andere Arbeitszeiten von Fahrer und Beifahrer einstellbar sind. Die Taste 9 ermöglicht eine Menüwahl, die Tasten 10 und 11 dienen dem Vor- und Rückwärtsblättern in den Datensätzen des jeweils angewählten Menüs. Mit der Taste 12 kann die Schublade 6 entriegelt und ein Vorschieben der Schublade in eine griffgünstige Position ausgelöst werden.

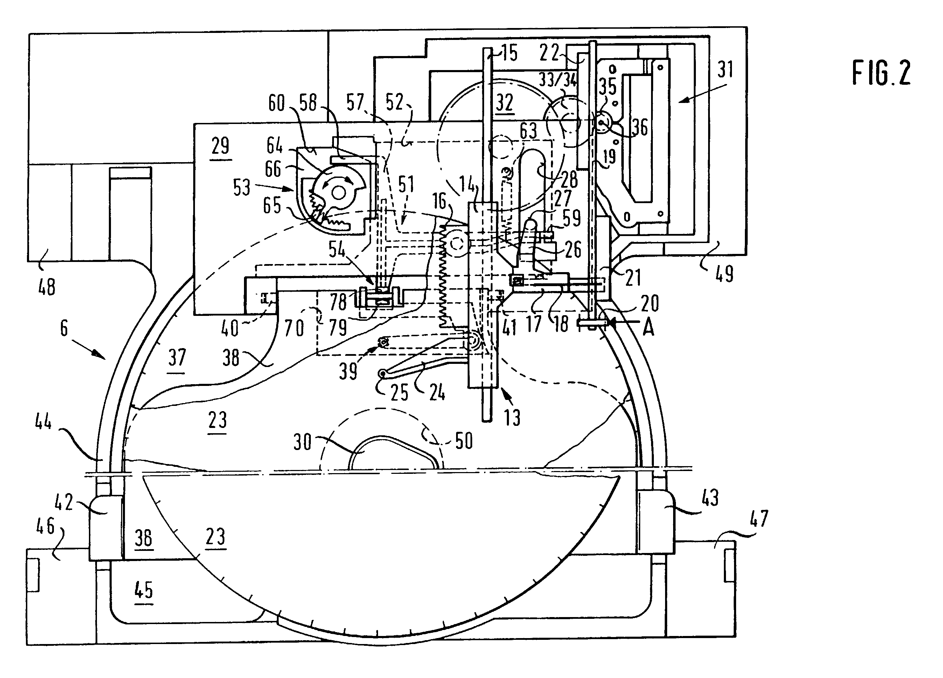

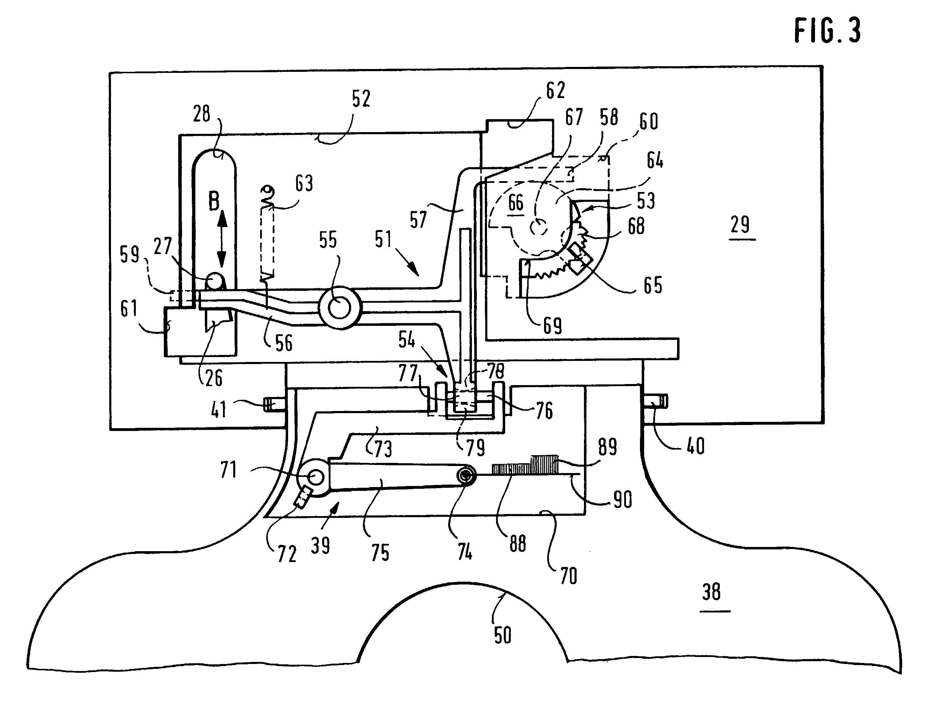

Die Draufsicht, Figur 2, zeigt die Schublade 6 mit den für die Beschreibung des Umfeldes der Neuerung erforderlichen Bauelementen und einer Mehrspurregistriervorrichtung 13, die in der in Figur 2 gewählten Blickrichtung auf die Schublade 6 gemeinsam mit einer nicht dargestellten Geschwindigkeitsregistriervorrichtung unterhalb einer im Gehäuse des Fahrtschreibers 1 befestigten, nicht dargestellten Montageplatine angeordnet ist. Die Mehrspurregistriervorrichtung 13 besteht im wesentlichen aus einem Schlitten 14, welcher auf einer Führungsstange 15 verschiebbar gelagert ist und mittels eines auf der Montageplatine befestigten Motors, der in getrieblicher Verbindung mit einer an dem Schlitten 14 ausgebildeten Zahnstange 16 steht, kontinuierlich oszillierend angetrieben wird. Über einen Arm 17 und eine Schenkelfeder 18 steht der Schlitten 14 mit einer Steuerwelle 19 in Wirkverbindung, welcher ein nicht dargesteller Stellmotor zugeordnet ist, der getrieblich (Pfeil A) mit einem auf der Steuerwelle 19 befestigten Zahnrad 20 verbunden ist. Mit 21 und 22 sind an der Steuerwelle 19 angeformte Nocken bezeichnet, von denen eine, 21, dem Schlitten 14, die andere, 22, einem gleichartigen Schlitten der nicht dargestellten Geschwindigkeitsregistriervorrichtung zugeordnet ist. Die Nocken 21 und 22 dienen dem Verschwenken der Schlitten auf der Führungsstange 15 und bezüglich der obenliegenden Diagrammscheibe 23 somit dem Anheben und Absenken der Schreibstifte. Das Anheben sämtlicher Schreibstifte muß selbstverständlich dann erfolgen, wenn die Schublade 6 geöffnet werden soll. Bei der Mehrspurregistriervorrichtung ist das Anheben außerdem wenigstens beim Wechsel von einer Registrierspur in die nächste erforderllich. Mit 24 ist ein am Schlitten 14 ausgebildeter Arm bezeichnet, der einen Schreibstift 25 der Mehrspurregistriervorrichtung trägt. Ein weiterer am Schlitten 14 angeformter Arm 26 dient, was nachfolgend noch näher erläutert wird, als Mitnehmer, wobei in dieser Funktion ein an dem Arm 26 angeformter Zapfen 27 durch ein Langloch 28 hindurchgreift, welches in einer in der Schublade 6 eingesetzten Brücke 29 ausgebildet ist. Die Bewegungsrichtungen des Mitnehmers bzw. des Zapfens 27 sind in Figur 3 mit einem Doppelpfeil B symbolisch dargestellt.

Wie die Figur 2 ferner zeigt, ist die bereits erwähnte obenliegende Diagrammscheibe 23 auf einem Zentrier- und Mitnahmedorn 30 aufgenommen, der uhrzeitrichtig angetrieben wird. Der Übersichtlichkeit halber ist das in der Schublade 6 gelagerte Getriebe zwischen dem Zentrierund Mitnahmedorn 30 und einem Motor 31 nur teilweise dargestellt. Dabei handelt es sich um ein Zahnrad 32, ein Zahnradpaar 33/34 und ein auf der Welle des Rotors 35 des Motors 31 befestigtes Ritzel 36. Ergänzend sei noch erwähnt, daß eine untenliegende, in dem betreffenden Zweifahrergerät dem Beifahrer zugeordnete Diagrammscheibe 37 ebenfalls auf dem Zentrier- und Mitnahmedorn 30 aufgenommen ist und von diesem uhrzeitrichtig angetrieben wird und daß die getriebliche Verbindung zwischen dem Motor 31 und dem Zentrier- und Mitnahmedorn sich im Boden der Schublade 6, das heißt unterhalb der untenliegenden Diagrammscheibe 37 befindet. Mit 38 ist eine zwischen den Diagrammscheiben 23 und 37 befindliche Distanzplatte bezeichnet, welche einerseits der obenliegenden Diagrammscheibe 23 als Registrierunterlage andererseits einem auf der untenliegenden Diagrammscheibe aufzeichnenden Registrierorgan 39 als Träger dient. Die Distanzplatte 38 ist, wie die Figur 2 zeigt, zum Zwecke des Wechselns der untenliegenden Diagrammscheibe 37 in der Brücke 29 und somit in der Schublade 6 in geeigneter Weise mittels Lagerzapfen 40 und 41 schwenkbar gelagert und stützt sich mittels angeformter Lappen 42 und 43 gegebenenfalls unter Verwendung von Ausrichtstiften und/oder einer lösbaren, ebenfalls dem Ausrichten der Distanzplatte 38 dienenden, nicht näher bezeichneten Fügeverbindung zwischen den Lappen 42, 43 und einem Versteifungsrand 44 der Schublade 6 auf dieser ab. Eine in der Schublade 6 ausgeformte Griffmulde 45 dient dem Greifen der Distanzplatte 38 und der Diagrammscheiben 23, 37 insbesondere bei deren Entnahme. Mit 46 und 47 sind der frontseitigen Fixierung der Schublade 6 dienende Konturen bezeichnet; 48 und 49 stellen mit geeigneten Schlitzen versehene Führungswangen dar. Der Vollständigkeit halber sei noch erwähnt, daß der Durchmesser einer in der Distanzplatte 38 ausgebildeten Öffnung 50 derart gewählt werden muß, daß eine freie Drehbewegung des exzentrisch ausgebildeten Zentrier- und Mitnahmedorns 30 sowie ein ungehindertes Verschwenken der Distanzplatte 38 in jeder Stellung des Zentrier- und Mitnahmedorns 30 gewährleistet ist.

Mit 51 ist ein die getriebliche Verbindung zwischen der Mehrspurregistriervorrichtung 13 und dem Registrierorgan 39 bildender Übertragungshebel bezeichnet, welcher in einer in der Brücke 29 vorgesehenen Freisenkung 52 angeordnet ist und welchem Justiermittel 53 zugeordnet sind. Die Kupplung zwischen dem Übertragungshebel 51 und dem Registrierorgan 39 ist mit 54 bezeichnet. Die Untersicht, Figur 3, verdeutlicht die Anordnung des Übertragungshebels 51 innerhalb der Freisenkung 52. Dabei ist der zweiarmige Übertragungshebel 51 auf einer an der Brücke 29 angeformten Achse 55 drehbar und axial selbstsichernd dadurch gelagert, daß an den Armen 56 und 57 angeformte fingerförmige Fortsätze 58 und 59 in eine Freisenkung 60 eingreifen bzw. die Brücke 29 hintergreifen. Bei der Montage wird der Übertragungshebel 51 durch Aufstecken auf die Achse 55 und durch Verschwenken in seine Funktionsstellung gebracht, wobei geeignete Durchbrüche oder Senkungen 61 und 62 vorgesehen sein müssen. Eine mit 63 bezeichnete, am Arm 56 angreifende Feder hält den Übertragungshebel 51 in einer Grundstellung, in der sich der Arm 57 mittels des fingerförmigen Fortsatzes 58 auf einem zu den Justiermitteln 53 gehörenden Exzenter 64 abstützt. Der Exzenter 64 bildet zusammen mit einem Rast- und Stellhebel 65 ein Bauteil, welches auf einem am Boden 66 der Freisenkung 60 angeformten Zapfen 67 drehbar gelagert ist. Mit 68 ist ein auf dem Boden 66 der Freisenkung 60 aufbauendes mit einer Rastverzahnung versehenes Zahnsegment bezeichnet, mit welchem der Rastund Stellhebel 65, der in geeigneter Weise gestuft und mit einer Kerbe versehen ausgebildet ist, zusammenwirkt. Das freie Ende des Rast- und Stellhebels 65 greift durch eine schlitzförmige, in den Figuren 2 und 3 sichtbare Öffnung, die bei der spritzgießtechnischen Bildung der Freisenkung 60 und einer dieser zugeordneten bogenförmigen Vertiefung 69 automatisch entsteht, auf die Unterseite der Brücke 29 durch, so daß der Exzenter 64 ebenso wie der Übertragungshebel 51 selbssichernd auf dem Zapfen 67 gelagert ist. Der Vollständigkeit halber sei erwähnt, daß die beschriebenen Justiermittel, der Einstellung der Lage des Armes 56 in Bezug auf den mitnehmenden Zapfen 27 dienen.

Wie aus der Figur 3 ferner noch hervorgeht ist das Registrierorgan 39 in einer in der Distanzplatte 38 ausgebildeten Vertiefung 70 angeordnet, und auf einem angeformten Stift 71 drehbar gelagert. Ein mit 72 bezeichneter, ebenfalls an der Distanzplatte 38 angeformter Rasthacken dient der axialen Sicherung des aus einem Hebel 73 und einer in dem Hebel 73 eingebetteten, einen Schreibstift 74 tragende Blattfeder 75 bestehenden Registrierorgans 39. Vorzugsweise findet als Schreibstift ein mittels einer geeigneten Fassung an der Blattfeder 75 befestigter Saphirstift Verwendung. Die zwischen dem Übertragungshebel 51 und dem Registrierorgan 39 vorgesehen Kupplung 54 ist als Gelenk ausgebildet und weist eine an dem Hebel 73 angeformte Achse 76 auf, an welcher eine am Arm 57 des Übertragungshebels 51 ausgebildete Gabel 77 angreift. Um wegen ungleicher Hebellängen ein Kippen der Gabel 77 auf der Achse 76 zu ermöglichen sind die Innenflächen der Gabelschenkel 78 und 79 gewölbt oder angeschrägt ausgebildet, so daß sich jeweils eine punkförmige Berührung zwischen der Achse 76 und den Schenkeln der Gabel 77 ergibt.

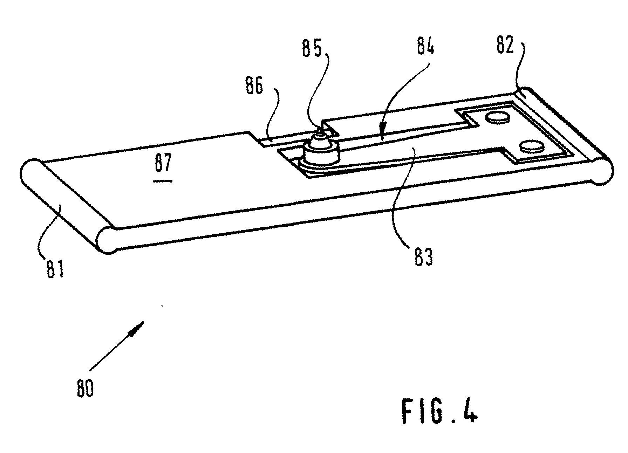

Das mit der Figur 4 dargestellte weitere Ausführungsbeispiel eines Registrierorgans 80 ist als Schieber ausgebildet, zu dessen Lagerung eine entsprechend gestaltete Freisparung in der Distanzplatte 38 vorgesehen werden muß. Dieses Ausführungsbeispiel ermöglicht im Gegensatz zum vorstehend beschriebenen Ausführungsbeispiel das Aufzeichnen geradliniger Diagrammelemente. Im Einzelnen sind an dem Schieber parallel zueinander Führungswülste 81 und 82 ausgebildet und zum Beispiel durch Ultraschallschweißen eine Blattfeder 83 befestigt, welcher in dem Schieber eine geeignete Vertiefung 84 zugeordnet ist. Mit 85 ist ein an der Blattfeder 83 befestigter Schreibstift bezeichnet. Eine mit 86 bezeichnete Achse stellt in gleicher Weise wie die Achse 76 ein Gelenkelement für das Einkuppeln des Übertragungshebels 51 dar.

In Figur 3 sind symbolisch drei Diagramme dargestellt, die vom Schreibstift 74 des Registrierorgans 39 auf der untenliegenden Diagrammscheibe, die in der in Figur 3 dargestellten Untersicht nicht gezeichnet ist, aufgezeichnet werden. Dabei bedeuten die Diagramme 88 und 89 unterschiedliche Arbeitsarten und das Diagramm 90, das in der erwähnten Grundstellung des Übertragungshebels 51 aufgezeichnet wird, Pause.

## Patentansprüche

1. Antriebsverbindung für ein Registrierorgan (39) in einem Fahrtschreiber (1) mit einem flachen Einbaugehäuse, in welchem als Aufzeichnungsträger gleichzeitig zwei gleichachsig angeordnete und mittels einer Schublade (6) zwischen einer Einlege-/Entnahmeposition und einer Registrierposition bewegbare, uhrzeitrichtig angetriebene Diagrammscheiben (23,37) Anwendung finden, ein auf der untenliegenden Diagrammscheibe (37) zur Aufzeichnung von Balkendiagrammen (88,89) wirksames Registrierorgan (39) an einer den beiden Diagrammscheiben (23,37) zugeordnetenDistanzplatte (38) gelagert ist und die Distanzplatte (38) zum Wechseln der untenliegenden Diagrammscheibe (37) im Körper der Schublade (6) derart schwenkbar angebracht ist, daß sich die geometrische Achse der Lagerung der Distanzplatte (38) in einer Parallellage zu den Diagrammscheiben (23,37) befindet
**dadurch gekennzeichnet,**
**daß** für das Aufzeichnen auf der obenliegenden Diagrammscheibe (23) eine Mehrspurregistriervorrichtung (13) mit einem einen Schreibstift (25) tragenden Schlitten (14) vorgesehen ist, welcher mittels eines Motors innerhalb eines mehrere Registrierspuren auf der Diagrammscheibe (23) umfassenden Registrierbereiches kontinuierlich hin- und herbewegt und dabei der Schreibstift (25) zur Erzeugung von Aufzeichnungselementen in den jeweiligen Registrierspuren kurzzeitig auf die Diagrammscheibe (23) abgesenkt und wieder angehoben wird,
**daß** bei geschlossener Schublade (6) des Fahrtschreibers (1) in der einen Endstellung des Schlittens (14) bezogen auf den Registrierbereich der Mehrspurregistriervorrichtung (13) auf der obenliegenden Diagrammscheibe (23) der Schlitten (14) und das in der Distanzplatte (38) gelagerte Registrierorgan (39) in Wirkverbindung stehen und
**daß** der Motor in dieser Endstellung derart angesteuert wird, daß der Schlitten (14) einen Überhub ausführt und das in der Distanzplatte (38) gelagerte Registrierorgan (39) gegen die Wirkung einer Feder (63) verschwenkt wird.

2. Antriebsverbindung nach Anspruch 1,
**dadurch gekennzeichnet,**
**daß** zwischen dem in der Distanzplatte (38) gelagerten Registrierorgan (39) und dem Schlitten (14) ein in der Schublade (6) parallel zu den Diagrammscheiben (23. 37) schwenkbar gelagerter zweiarmiger Übertragungshebel (51) als Wirkverbindung vorgesehen ist, dessen einer Arm (57) mit dem Registrierorgan (39) derart gelenkig gekuppelt ist, daß die Drehachse der Kupplung (54) im wesentlichen mit der geometrischen Achse der Lagerung der Distanzplatte (38) zusammenfält und an dessen anderem freien Arm (56) ein an dem Schlitten (14) ausgebildeter Mitnehmer (26, 27) angreift, wenn sich der Schlitten (14) in der einen Endstellung befindet.

3. Antriebsverbindung nach Anspruch 2,
**dadurch gekennzeichnet,**
**daß** die zwischen dem in der Distanzplatte (38) und dem Übertragungshebel (51) vorgesehene Kupplung (54) dadurch gebildet ist, daß an dem Registrierorgan (39) eine Achse (76) angeformt ist, die von einer am Übertragungshebel (51) ausgebildeten Gabel (77) umgriffen wird

4. Antriebsverbindung nach Anspruch 1
**dadurch gekennzeichnet,**
**daß** das in der Distanzplatte (38) gelagerte Registrierorgan (39) aus einem Hebel (73) mit einer daran befestigten einen Schreibstift (74) tragenden Blattfeder (75) besteht.

5. Antriebsverbindung nach Anspruch 1,
**dadurch gekennzeichnet,**
**daß** das Registrierorgan (80) als ein in der Distanzplatte (38) gelagerter Schieber mit einer darauf befestigten, einen Schreibstift (85) tragenden Blattfeder (83) ausgebildet ist.

6. Antriebsverbindung nach Anspruch 3,
**dadurch gekennzeichnet,**
**daß** die der Achse (76) der Kupplung (54) zugewandten Innenflächen der Gabel (77) derart gestaltet sind, daß beim Betätigen des in der Distanzplatte (38) gelagerten Registrierorgans (39) durch den Übertragungshebel (51) zwischen der Gabel (77) und der Achse (76) eine punktförmige Berührung gegeben ist.

## Claims

1. Drive connection for a recording elements (39) in a tachograph (1) having a flat installation housing in which two diagram disks (23, 37) which are arranged coaxially, can be moved by means of a drawer (6) between an insertion/removal position and a recording position and can be driven simultaneously at the correct time are applied as recording carriers, a recording element (39) which can act on the bottom diagram disk (37) in order to record bar diagrams (88, 89) is mounted on a spacer plate (38) which is assigned to the two diagram disks (23, 37), and the spacer plate (38) is mounted in a pivotable fashion in the body of the drawer (6) in order to change the bottom diagram disk (37), in that the geometric axis of the bearing of the spacer plate (38) is located in a parallel position to the diagram disks (23, 37), **characterized in that**, in order to record on the top diagram disk (23), a multitrack recording device (13) is provided with a carriage (14) which supports a writing pin (25) and which is moved to and fro continuously by means of a motor within a recording region comprising a plurality of recording tracks on the diagram disk (23) and in the process the writing pin (25) is lowered briefly onto the diagram disk (23) in order to produce registration elements in the respective recording tracks, and is raised again, **in that**, when the drawer (6) of the tachograph (1) is closed and in the one end position of the carriage (14) with respect to the recording region of the multitrack recording device (13) on the top diagram disk (23), the carriage (14) and the recording element (39) which is mounted in the spacer plate (39) are operatively connected, and **in that** in this end position the motor is actuated in such a way that the carriage (14) undergoes excess travel and the registration element (39) which is mounted in the spacer plate (38) is pivoted counter to the effect of a spring (63).

2. Drive connection according to Claim 1,
**characterized in that** a two-armed transmission lever (51), which is pivotably mounted in the drawer (6) parallel to the diagram disks (23, 27), is provided as an operative connection between the recording element (39) which is mounted in the spacer plate (38) and the carriage (14), one arm (57) of said transmission lever (51) being coupled to the recording element (39) in an articulated fashion such that the axis of rotation of the coupling (54) coincides essentially with the geometric axis of the bearing of the spacer plate (38) and a driver (26, 27) which is formed on the carriage (14) acts on the other free arm (56) of said transmission lever (51) when the carriage (14) is in the one end position.

3. Drive connection according to Claim 2,
**characterized in that** the coupling (54) which is provided between the in the spacer plate (38) and the transmission lever (51) is formed **in that** an axis (76), around which a fork (77) which is formed on the transmission lever (51) engages, is formed on the recording element (39).

4. Drive connection according to Claim 1,
**characterized in that** the recording element (39) which is mounted in the spacer plate (38) is composed of a lever (73) with a leaf spring (75) which supports a writing pin (74) which is attached thereto.

5. Drive connection according to Claim 1,
**characterized in that** the recording element (80) is embodied as a slide which is mounted in the spacer plate (38) and has a leaf spring (83) which is attached thereto and supports a writing pin (85).

6. Drive connection according to Claim 3,
**characterized in that** the internal faces of the fork (77) which face the axis (76) of the coupling (54) are shaped in such a way that when the recording element (39) which is mounted in the spacer plate (38) is activated by the transmission lever (51), punctiform contact occurs between the fork (77) and the axis (76).

## Revendications

1. Liaison d'entraînement pour un organe d'enregistrement (39) dans un tachygraphe (1) à coffret encastrable p lat, dans lequel on utilise, comme support d'enregistrement, simultanément deux disques-diagrammes (23, 37) montés sur le même axe, qui peuvent être déplacés, au moyen d'un tiroir (6), entre une position de mise en place/d'extraction et une position d'enregistrement et qui sont entraînés en concordance avec l'heure, dans lequel un organe d'enregistrement (39), agissant sur le disque-diagramme qui se trouve en bas (37) pour y enregistrer des graphiques de Gantt (88, 89), est monté sur une plaque d'espacement (38) affectée à l'un des deux disques-diagrammes (23, 37) et dans lequel la plaque d'espacement (38) permettant de changer le disque-diagramme qui se trouve en bas (37) est montée dans le corps du tiroir (6) d'une façon pivotante de telle manière que l'axe géométrique du support de la plaque d'espacement (38) se trouve dans une position parallèle aux disques-diagrammes (23, 37)
**caractérisée par le fait**
**que**, pour l'enregistrement sur le disque-diagramme qui se trouve en haut (23), il est prévu un dispositif d'enregistrement à plusieurs pistes (13) comportant un chariot (14) portant un stylet (25), lequel est déplacé, au moyen d'un moteur, d'une façon continue d'un côté à l'autre à l'intérieur d'une zone d'enregistrement comprenant plusieurs pistes d'enregistrement sur le disque-diagramme (23) et où le stylet (25), pour la production d'éléments d'enregistrement sur les pistes d'enregistrement respectives est abaissé brièvement sur le disque-diagramme (23), puis relevé,
**que**, lorsque le tiroir (6) du tachygraphe (1) est fermé, dans l'une des positions finales du chariot (14) rapportée à la zone d'enregistrement du dispositif d'enregistrement à plusieurs pistes (13) sur le disque-diagramme qui se trouve en haut (23), le chariot (14) et l'organe d'enregistrement (39) monté sur la plaque d'espacement (38) sont en liaison active et
**que** le moteur, dans sa position finale, est commandé de telle manière que le chariot (14) exécute un dépassement de course et l'organe d'enregistrement (39) monté dans la plaque d'espacement (38) est basculé contre l'action d'un ressort (63).

2. Liaison d'entraînement selon la revendication 1
**caractérisée par le fait**
**que**, entre l'organe d'enregistrement (39) monté dans la plaque d'espacement (38) et le chariot (14), il est prévu, en tant que liaison active, dans le tiroir (6), en parallèle avec les disques-diagrammes (23, 37), un levier de transmission (51) à deux bras monté d'une façon pivotante dont l'un des deux bras (57) est couplé d'une façon articulée avec l'organe d'enregistrement (39) de telle manière que l'axe de rotation de l'accouplement (54) concorde, pour l'essentiel, avec l'axe géométrique de la fixation de la plaque d'espacement (38) et dont l'autre des deux bras (56), qui est libre, est accroché à un agent d'entraînement (26, 27) formé sur le chariot (14), lorsque le chariot (14) se trouve dans sa position finale.

3. Liaison d'entraînement selon la revendication 2
**caractérisée par le fait**
**que** l'accouplement (54) prévu entre l'organe d'enregistrement (39) monté dans la plaque d'espacement (38) et le levier de transmission (51) est formé par le fait que, sur l'organe d'enregistrement (39), est formé un axe (76) qui est saisi par une fourchette (77) formée sur le levier de transmission (51).

4. Liaison d'entraînement selon la revendication 1
**caractérisée par le fait**
**que** l'organe d'enregistrement (39) monté dans la plaque d'espacement (38) se compose d'un levier (73) comportant un ressort à lame (75), qui lui est fixé et qui porte un stylet (74).

5. Liaison d'entraînement selon la revendication 1
**caractérisée par le fait**
**que** l'organe d'enregistrement (80) est conçu sous la forme d'un coulisseau monté dans la plaque d'espacement (38), comportant un ressort à lames (83), qui lui est fixé, et qui porte un stylet (85).

6. Liaison d'entraînement selon la revendication 3
**caractérisée par le fait**
**que** les surfaces intérieures de la fourchette (77), tournées vers l'axe (76) de l'accouplement (54), sont conçues de telle sorte que, lors de l'actionnement, par le levier de transmission (51), de l'organe d'enregistrement (39) monté dans la plaque d'espacement (38), il se produit un contact ponctuel entre la fourchette (77) et l'axe (76).
